(19) Europäisches Patentamt
European Patent Office
Office européen des brevets

(11) **EP 3 982 088 A1**

(12) **EUROPÄISCHE PATENTANMELDUNG**

(43) Veröffentlichungstag:
**13.04.2022 Patentblatt 2022/15**

(21) Anmeldenummer: **20200310.9**

(22) Anmeldetag: **06.10.2020**

(51) Internationale Patentklassifikation (IPC):
**G01D 5/244** *(2006.01)*

(52) Gemeinsame Patentklassifikation (CPC):
**G01D 5/24485**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Dr. Johannes Heidenhain GmbH 83301 Traunreut (DE)**

(72) Erfinder: **MITTERLEITNER, Josef 83339 Chieming (DE)**

(54) **POSITIONSMESSEINRICHTUNG**

(57)     Eine Positionsmesseinrichtung umfasst einen Maßstab (10), eine erste Abtasteinheit (14.1), eine zweite Abtasteinheit (14.2) und einen Abtastträger (2) zum Tragen der ersten und zweiten Abtasteinheit (14.1, 14.2). Abtastorte der ersten und zweiten Abtasteinheit (14.1, 14.2) sind bei einer vorbestimmten Temperatur ($T_0$) der Positionsmesseinrichtung in einem vorbestimmten ersten Abstand ($a_0$) voneinander angeordnet. Die Positionsmesseinrichtung weist mindestens einen Sensor (16) zum Erfassen einer Temperatur ($T_A$) des Abtastträgers (2) auf. Die Positionsmesseinrichtung ist dazu ausgebildet, in Abhängigkeit eines durch die erste und zweite Abtasteinheit (14.1, 14.2) ermittelten zweiten Abstands ($a_1$) zwischen den Abtastorten der ersten und zweiten Abtasteinheit (14.1, 14.2) bei der Temperatur ($T_A$) des Abtastträgers (2) und in Abhängigkeit der Temperatur ($T_A$) des Abtastträgers (2) eine Dehnung ($\varepsilon$) des Maßstabs (10) örtlich aufgelöst zu bestimmen.

Fig.1

**Beschreibung**

## GEBIET DER TECHNIK

Die vorliegende Erfindung betrifft eine Positionsmesseinrichtung nach dem Oberbegriff des Anspruchs 1.

## STAND DER TECHNIK

DE 199 19 042 A1 offenbart ein Messsystem mit einem vereinfachten Abtastkopf, der dennoch eine Kompensation von thermisch bedingten Fehlern ermöglicht. Es wird zunächst bei einer Referenztemperatur der Abstand zwischen zwei Abtaststellen ermittelt und im späteren Betrieb aus der Änderung des Abstands zwischen den beiden Abtaststellen im Vergleich zum Referenzabstand die gegenwärtige Temperatur berechnet. Bei Kenntnis der gegenwärtigen Temperatur kann dann ein Messwert des Messsystems temperaturkompensiert werden.

## ZUSAMMENFASSUNG DER ERFINDUNG

Der vorliegenden Erfindung liegt die Aufgabe zugrunde, eine Positionsmesseinrichtung anzugeben, die einen einfachen und kostengünstigen Aufbau hat und mit der eine präzise Positionsmessung ermöglicht wird.

Diese Aufgabe wird erfindungsgemäß durch eine Positionsmesseinrichtung mit den Merkmalen des Anspruchs 1 gelöst.

Die erfindungsgemäß ausgebildete Positionsmesseinrichtung umfasst einen Maßstab, der eine Messteilung aufweist, eine erste Abtasteinheit zum Abtasten der Messteilung, eine zweite Abtasteinheit zum Abtasten der Messteilung und einen Abtastträger zum Tragen der ersten und zweiten Abtasteinheit. Abtastorte der ersten und zweiten Abtasteinheit sind bei einer vorbestimmten Temperatur der Positionsmesseinrichtung in einem vorbestimmten ersten Abstand voneinander angeordnet. Die Positionsmesseinrichtung weist mindestens einen Sensor zum Erfassen einer Temperatur des Abtastträgers auf. Die Positionsmesseinrichtung ist dazu ausgebildet, in Abhängigkeit eines durch die erste und zweite Abtasteinheit (bzw. unter Verwendung der ersten und zweiten Abtasteinheit) ermittelten zweiten Abstands zwischen den Abtastorten der ersten und zweiten Abtasteinheit bei der Temperatur des Abtastträgers und in Abhängigkeit der Temperatur des Abtastträgers eine Dehnung des Maßstabs örtlich aufgelöst zu bestimmen.

Es ist vorteilhaft, wenn die Positionsmesseinrichtung dazu ausgebildet ist, in Abhängigkeit der Dehnung des Maßstabs eine Längenänderung des Maßstabs örtlich aufgelöst zu bestimmen.

Ferner ist es vorteilhaft, wenn die Positionsmesseinrichtung dazu ausgebildet ist, in Abhängigkeit der Längenänderung des Maßstabs einen thermisch kompensierten Positionswert örtlich aufgelöst zu bestimmen. Beispielsweise ist der Sensor an oder in dem Abtastträger oder in einer der ersten und zweiten Abtasteinheit angeordnet.

Die Positionsmesseinrichtung kann ferner zwei Sensoren zum Erfassen der Temperatur (z. B. Mittelwert der Temperatur) des Abtastträgers aufweisen, wobei einer der beiden Sensoren in der ersten Abtasteinheit und der andere der beiden Sensoren in der zweiten Abtasteinheit angeordnet sind.

Die Positionsmesseinrichtung dient bevorzugt zur Positionsmessung in einer Längsrichtung des Maßstabs (Messrichtung X).

Die Messteilung ist insbesondere eine Inkrementalteilung. Anstelle einer Inkrementalteilung kann die Messteilung auch eine absolute Teilung sein, beispielsweise ausgebildet als Pseudo-Random-Code.

Durch die Erfindung wird unter Nutzung mindestens eines Sensors zum Erfassen einer Temperatur des Abtastträgers eine thermisch kompensierte Positionsmessung in Messrichtung X erreicht. Hierzu wird bei Kenntnis der Temperatur des Abtastträgers der Einfluss der thermischen Ausdehnung des Abtastträgers bei der Temperaturkompensation berücksichtigt. Es erfolgt also quasi eine Trennung, d. h. getrennte Betrachtung der thermischen Ausdehnung des Abtastträgers und derjenigen des Maßstabs. Bei der thermisch kompensierten Positionsmessung kann somit auf die Verwendung eines Nullausdehnungsmaterials, wie z. B. Zerodur, für den Abtastträger und/oder für den Maßstab verzichtet werden. Dadurch wird zum einen ein einfacher und kostengünstiger Aufbau erreicht. Zum anderen wird dadurch eine hohe Präzision der Positionsmessung ermöglicht.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausgestaltungen der Erfindung in Verbindung mit den Figuren erläutert.

## KURZE BESCHREIBUNG DER ZEICHNUNGEN

Es zeigen

Figur 1   eine Seitenansicht einer Positionsmesseinrichtung gemäß einem Ausführungsbeispiel; und

Figur 2    eine Draufsicht auf die Positionsmesseinrichtung nach Figur 1.

## BESCHREIBUNG DER AUSFÜHRUNGSFORMEN

Gleiche Elemente oder funktionell gleiche Elemente sind in den Figuren mit gleichen Bezugszeichen versehen.

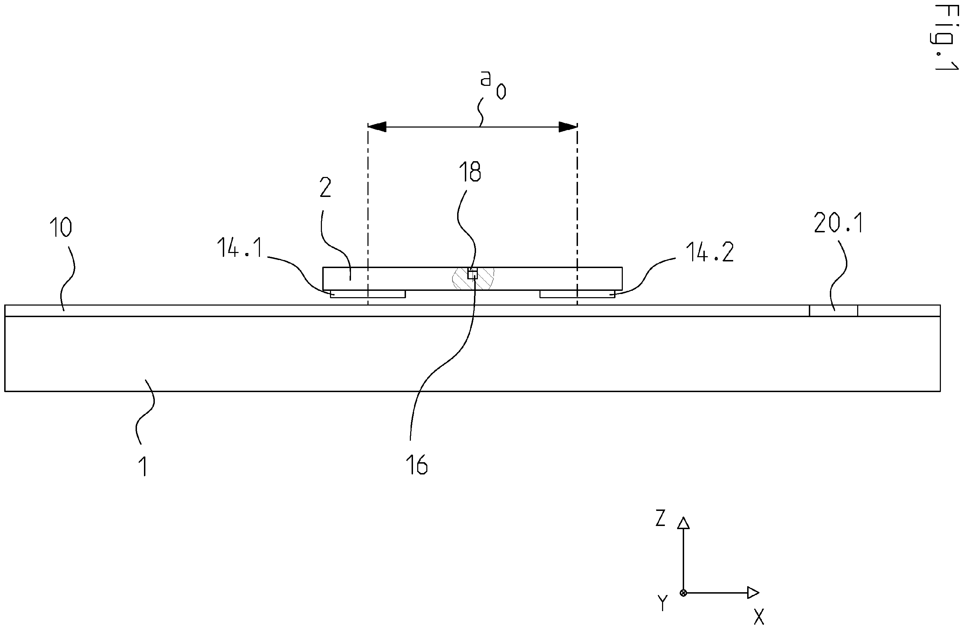

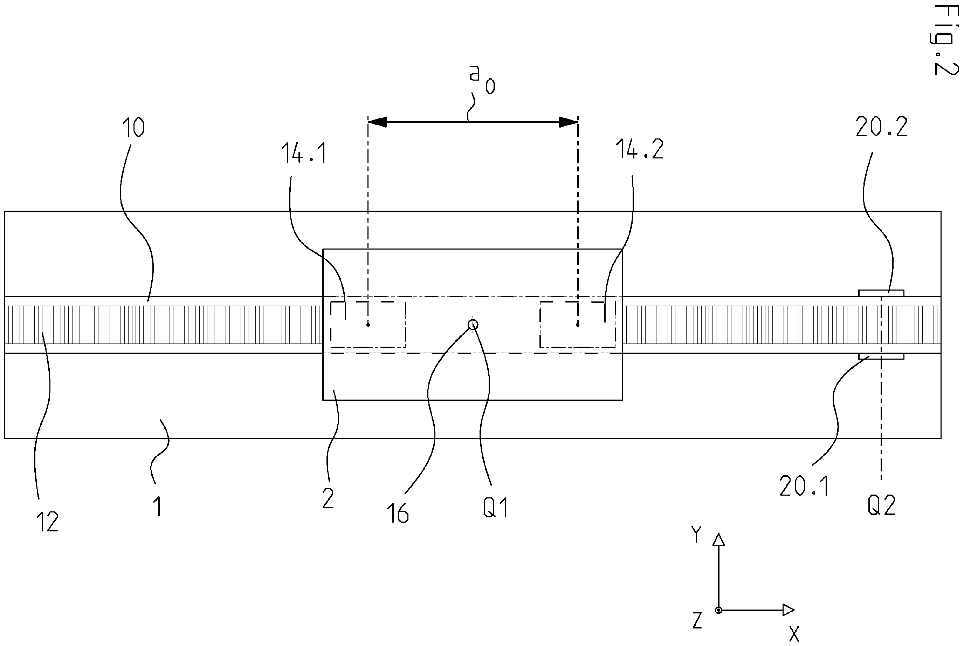

Ein Ausführungsbeispiel wird nachfolgend anhand der Figuren 1 und 2 erläutert. Die Positionsmesseinrichtung gemäß dem Ausführungsbeispiel dient zur Messung der Relativlage zweier zueinander beweglicher Objekte in Messrichtung X. Die Messrichtung X entspricht einem linearen Freiheitsgrad (Freiheitsgrad X).

Die Positionsmesseinrichtung gemäß dem Ausführungsbeispiel umfasst einen Maßstab 10, der auf einem Grundkörper 1 (z. B. ortsfestes Referenzteil) angeordnet ist. Ferner umfasst die Positionsmesseinrichtung gemäß dem Ausführungsbeispiel einen relativ zum Maßstab 10 beweglich angeordneten Abtastträger 2 zum Tragen einer ersten und zweiten Abtasteinheit 14.1, 14.2. Die erste und zweite Abtasteinheit 14.1, 14.2 sind auf einer Unterseite des Abtastträgers 2 angeordnet. Der Abtastträger 2 ist zumindest in dem Freiheitsgrad X beweglich und an einem zu messenden Objekt befestigbar.

Wie in Figur 2 gezeigt, umfasst der Maßstab 10 eine Messteilung 12 (Inkrementalteilung). Die erste und zweite Abtasteinheit 14.1, 14.2 dienen jeweils zum Abtasten der Messteilung 12. Mit Bezug auf Figur 1 und 2 sind Abtastorte der ersten und zweiten Abtasteinheit 14.1, 14.2 bei einer vorbestimmten Temperatur $T_0$ (z. B. $T_0 = 20°C$) der Positionsmesseinrichtung in einem vorbestimmten ersten Abstand $a_0$ voneinander angeordnet. Der erste Abstand $a_0$ ist insbesondere ein werkseitig bestimmter Abstand.

Die Positionsmesseinrichtung gemäß dem Ausführungsbeispiel weist einen Sensor 16 zum Erfassen einer Temperatur $T_A$ (z. B. $T_A = 25°C$) des Abtastträgers 2 auf. Mit Bezug auf Figur 1 ist der Sensor 16 in dem Abtastträger 2, insbesondere innerhalb eines Sacklochs 18, angeordnet. Alternativ kann der Sensor 16 auch in der ersten Abtasteinheit 14.1 oder in der zweiten Abtasteinheit 14.2 angeordnet sein (in den Figuren nicht gezeigt). Die Positionsmesseinrichtung gemäß dem Ausführungsbeispiel ist dazu ausgebildet, in Abhängigkeit eines durch die erste und zweite Abtasteinheit 14.1, 14.2 ermittelten zweiten Abstands $a_1$ zwischen den Abtastorten der ersten und zweiten Abtasteinheit 14.1, 14.2 bei der Temperatur $T_A$ des Abtastträgers 2 und in Abhängigkeit der Temperatur $T_A$ des Abtastträgers 2 eine Dehnung $\varepsilon$ des Maßstabs 10 örtlich aufgelöst zu bestimmen. Hierzu wird insbesondere die folgende Beziehung verwendet:

$$\varepsilon(x) = \frac{a_1(x)}{a_0[1+(T_A(x)-T_0)\cdot\alpha_A]} - 1 \qquad \text{(Gl. 1)}$$

Dabei sind $\varepsilon$, $a_1$ und $T_A$ jeweils Funktionen vom Ort x (X-Position bzw. Position in Messrichtung X), d. h. $\varepsilon = \varepsilon(x)$, $a_1 = a_1(x)$ und $T_A = T_A(x)$; $a_0$ und $T_0$ sind der erste Abstand (Referenzabstand) bzw. die vorbestimmte Temperatur (Referenztemperatur); $\alpha_A$ ist der thermische Ausdehnungskoeffizient des Abtastträgers 2.

Ferner ist die Positionsmesseinrichtung dazu ausgebildet, in Abhängigkeit der Dehnung $\varepsilon$ des Maßstabs 10 eine Längenänderung $\Delta L_M$ des Maßstabs 10 örtlich aufgelöst zu bestimmen. Dabei erfolgt die Bestimmung der Längenänderung $\Delta L_M$ des Maßstabs 10 durch eine numerische Integration der Dehnung $\varepsilon$ des Maßstabs 10 über den Ort x, vgl. insbesondere die folgende Beziehung:

$$\Delta L_M(x) = \int \varepsilon(x)\, dx \qquad \text{(Gl. 2)}$$

Dabei ist $\Delta L_M$ eine Funktion vom Ort x, d. h. $\Delta L_M = \Delta L_M(x)$.

Darüber hinaus ist die Positionsmesseinrichtung dazu ausgebildet, in Abhängigkeit der Längenänderung $\Delta L_M$ des Maßstabs 10 einen thermisch kompensierten Positionswert $X_K$ örtlich aufgelöst zu bestimmen. Hierzu wird insbesondere die folgende Beziehung verwendet:

$$X_K(x) = X_M(x) - \Delta L_M(x) \qquad \text{(Gl. 3)}$$

Dabei ist $X_K$ eine Funktion vom Ort x, d. h. $X_K = X_K(x)$; $X_M$ ist ein durch die erste und/oder zweite Abtasteinheit 14.1, 14.2 ermittelter Positionswert (gemessener oder detektierter Positionswert) und eine Funktion vom Ort x, d. h. $X_M = X_M(x)$.

Die Positionsmesseinrichtung gemäß dem Ausführungsbeispiel dient also zur Realisierung einer örtlich aufgelösten Bestimmung der Parameter $\varepsilon$, $\Delta L_M$ und $X_K$ (siehe die Gleichungen 1 bis 3) und somit zur Realisierung einer thermisch kompensierten Positionsmessung.

Mit Bezug auf Figur 2 ist der Sensor 16 an einem ersten vorbestimmten Ort Q1 zwischen den Abtastorten der ersten und zweiten Abtasteinheit 14.1, 14.2 angeordnet. Dabei liegt der erste vorbestimmte Ort Q1 in der Mitte zwischen den Abtastorten der ersten und zweiten Abtasteinheit 14.1, 14.2. Der erste vorbestimmte Ort Q1 ist insbesondere ein Ort, an dem die Temperatur $T_A$ des Abtastträgers 2 gleich einem Mittelwert der Temperatur $T_A$ des Abtastträgers 2 zwischen den Abtastorten der ersten und zweiten Abtasteinheit 14.1, 14.2 ist. Alternativ kann der erste vorbestimmte Ort Q1 auch ein Ort sein, an dem die Temperatur $T_A$ des Abtastträgers 2 von einem Mittelwert der Temperatur $T_A$ des Abtastträgers 2 zwischen den Abtastorten der ersten und zweiten Abtasteinheit 14.1, 14.2 abweicht. In diesem Fall ist die Positionsmesseinrichtung dazu ausgebildet, in Abhängigkeit einer Abweichung der Temperatur $T_A$ des Abtastträgers 2 vom Mittelwert der Temperatur $T_A$ des Abtastträgers 2 zwischen den Abtastorten der ersten und zweiten Abtasteinheit 14.1, 14.2 einen Korrekturparameter zu bestimmen und in Abhängigkeit des Korrekturparameters die Temperatur $T_A$ des Abtastträgers 2 für die Bestimmung der Dehnung $\varepsilon$ des Maßstabs 10 zu korrigieren.

Ferner mit Bezug auf Figur 2 weist die Positionsmesseinrichtung ein Paar von Befestigungselementen 20.1, 20.2 zum Befestigen des Maßstabs 10 an dem Grundkörper 1 auf. Die Befestigungselemente 20.1, 20.2 liegen sich in Y-Richtung, d. h. in einer senkrecht zur Messrichtung X verlaufenden Richtung, einander gegenüber. Die Befestigungselemente 20.1, 20.2 sind dazu ausgebildet, den Maßstab 10 an einem zweiten vorbestimmten Ort Q2 in Messrichtung X starr gegenüber dem Grundkörper 1 zu tragen. Der zweite vorbestimmte Ort Q2 ist insbesondere ein Ort, an dem die Längenänderung $\Delta L_M$ des Maßstabs 10 gleich Null ist. Dadurch wird eine Randbedingung zur Bestimmung einer Integrationskonstanten für die numerische Integration (Gleichung 2) festgelegt. Es gilt insbesondere die folgende Beziehung:

$$\Delta L_M(x = x_{Fix}) = 0 \qquad\qquad \text{(Gl. 4)}$$

Dabei ist $x_{Fix}$ eine X-Position des temperaturunabhängigen Fixpunkts und entspricht dem zweiten vorbestimmten Ort Q2.

Beispielsweise weisen die Befestigungselemente 20.1, 20.2 jeweils eine Kehlnaht zur Verbindung des Maßstabs 10 mit dem Grundkörper 1 auf (Kehlnahtklebung).

Bei dem dargestellten Ausführungsbeispiel können die Temperatur $T_A$ des Abtastträgers 2 und die vorbestimmte Temperatur $T_0$ (Referenztemperatur) gleich oder voneinander verschieden sein. Nur wenn die Temperatur $T_A$ des Abtastträgers 2 und die vorbestimmte Temperatur $T_0$ gleich sind, verschwindet der Einfluss der thermischen Ausdehnung des Abtastträgers 2 bei der Temperaturkompensation.

Ferner können beim dargestellten Ausführungsbeispiel die Temperatur $T_A$ des Abtastträgers 2 und eine durch die Positionsmesseinrichtung bestimmbare Temperatur $T_M$ des Maßstabs 10 gleich oder voneinander verschieden sein. Es ist insbesondere keine Voraussetzung bei der Temperaturkompensation, dass die Temperatur $T_A$ des Abtastträgers 2 und die Temperatur $T_M$ des Maßstabs 10 gleich sein müssen. Stattdessen können die Temperatur $T_A$ des Abtastträgers 2 und die Temperatur $T_M$ des Maßstabs 10 auch voneinander verschieden sein und somit keine gemeinsame Temperatur (Systemtemperatur) der Positionsmesseinrichtung haben.

Der Abtastträger 2 hat insbesondere einen von Null verschiedenen thermischen Ausdehnungskoeffizienten $\alpha_A$. Dadurch ist zum einen die Herstellung des Abtastträgers 2 (und somit die Positionsmesseinrichtung) relativ kostengünstig, und zum anderen gibt es keine Einschränkung bzw. Verringerung der Konstruktionsfreiheiten.

Der Abtastort ist definiert als der Bezugspunkt der Positionsmessung der jeweiligen ersten und zweiten Abtasteinheit 14.1, 14.2. In Figur 2 ist der Abtastort innerhalb jeder der ersten und zweiten Abtasteinheit 14.1, 14.2 mit einem kleinen Kreis symbolisch dargestellt.

Der Mittelwert der Temperatur $T_A$ des Abtastträgers 2 ist beispielsweise durch folgende Beziehung gegeben:

$$T_A = \frac{T_{A1} + T_{A2}}{2} \qquad\qquad \text{(Gl. 5)}$$

Dabei sind $T_{A1}$ und $T_{A2}$ die jeweilige Temperatur des Abtastträgers 2 am Abtastort der ersten Abtasteinheit 14.1 bzw. am Abtastort der zweiten Abtasteinheit 14.2.

Vorzugsweise hat der Abtastträger 2 ein Temperaturprofil, das symmetrisch zu einer Symmetrieebene (d. h. Ebene, die quer zur Messrichtung X und durch einen Mittelpunkt zwischen den Abtastorten der ersten und zweiten Abtasteinheit 14.1, 14.2 verläuft) ist.

Die Erfindung ermöglicht eine besonders hochauflösende Positionsmessung, wenn die Messteilung 12 optisch abtastbar ausgebildet ist. Die Messteilung 12 kann alternativ auch magnetisch, induktiv oder kapazitiv abtastbar ausgebildet sein.

Im Übrigen kann die Positionsmesseinrichtung dazu ausgebildet sein, in Abhängigkeit der Längenänderung $\Delta L_M$ des Maßstabs 10 die Temperatur $T_M$ des Maßstabs 10 örtlich aufgelöst zu bestimmen. Hierzu kann die folgende Beziehung verwendet werden:

$$T_M(x) = \frac{\Delta L_M(x)}{a_0[1+(T_A(x)-T_0)\cdot\alpha_A]\cdot\alpha_M} + T_0 \qquad \text{(Gl. 6)}$$

Dabei sind $T_M$ und $\Delta L_M$ jeweils eine Funktion vom Ort x, d. h. $T_M = T_M(x)$ und $\Delta L_M = \Delta L_M(x)$; $\alpha_M$ ist der thermische Ausdehnungskoeffizient des Maßstabs 10. Die anderen Parameter $a_0$, $T_A$, $T_0$ und $\alpha_A$ entsprechen denjenigen von Gleichung 1.

Durch die Erfindung kann auch ohne die Verwendung eines kostspieligen Abtastträgers 2, beispielsweise gefertigt aus Zerodur, eine präzise Temperaturkompensation erreicht werden.

Wegen der Abwärme an den einzelnen Abtastorten (d. h. Abtastorte der ersten und zweiten Abtasteinheit 14.1, 14.2), aber auch aufgrund äußerer Temperatureinflüsse, ist die Temperatur $T_A$ üblicherweise nicht homogen über den Abtastträger 2 verteilt. Um die temperaturbedingte Abstandsänderung der beiden Abtastorte auf dem Abtastträger 2 möglichst genau zu ermitteln, ist der Sensor 16 vorzugsweise derart angeordnet, dass der Temperaturmesswert (Temperatur $T_A$) einer mittleren Temperatur zwischen den beiden Abtastorten entspricht. Für die Sensorplatzierung empfiehlt es sich, Versuche oder numerische Simulationen durchzuführen, um einen aussagekräftigen Messort (d. h. erster vorbestimmter Ort Q1) unter gegebenen äußeren Randbedingungen, wie z. B. lokale Temperaturquellen Anbausituation, etc. zu bestimmen. Dabei kann auch eine mögliche Abweichung der gemessenen Temperatur $T_A$ von der mittleren Temperatur bestimmt werden. Der so ermittelte Korrekturparameter wird beispielsweise in einer Auswerteeinheit (nicht gezeigt) der Positionsmesseinrichtung hinterlegt, und die gemessene Temperatur $T_A$ wird mit diesem Korrekturparameter korrigiert, bevor sie in Gleichung 1 zur Bestimmung der Dehnung $\varepsilon$ (bzw. in Gleichung 2 zur Bestimmung der Längenänderung $\Delta L_M$) des Maßstabs 10 genutzt wird.

Um die Temperaturverteilung über den Abtastträger 2 zu homogenisieren, kann es vorteilhaft sein, die Wärmeleitung des Abtastträgers 2 durch geeignete Materialwahl (hohe Wärmeleitfähigkeit) und Geometriewahl (große Querschnittsfläche) zu maximieren.

Im Folgenden wird ein mit der Positionsmesseinrichtung durchführbares beispielhaftes Verfahren zur Temperaturkompensation im Einzelnen beschrieben. Zur Bestimmung der thermischen Ausdehnung sind die beiden Abtastorte der ersten und zweiten Abtasteinheit 14.1, 14.2 auf dem Abtastträger 2 in einem definierten Abstand zueinander angeordnet. Der genaue Abstand der beiden Abtastorte (d. h. Referenzabstand bzw. vorbestimmter erster Abstand $a_0$) wird bei der Referenztemperatur $T_0$ bestimmt. Hierzu wird das gesamte Messsystem auf die konstante Referenztemperatur $T_0$, vorzugsweise $T_0 = 20°C$, gebracht. Bei Verwendung einer absoluten Teilung kann der Referenzabstand $a_0$ direkt aus der Differenz der durch die erste und zweite Abtasteinheit 14.1, 14.2 an den beiden Abtastorten ausgegebenen Positionssignale (X-Positionswerte) ermittelt werden. Bei Verwendung der Inkrementalteilung wird der Referenzabstand $a_0$ an einer Referenzmarke (in den Figuren nicht gezeigt) des Maßstabs 10 bestimmt. Beim Überfahren der Referenzmarke durch den Abtastort der ersten Abtasteinheit 14.1 (oder durch den Abtastort der zweiten Abtasteinheit 14.2) wird ein Zähler gestartet, und beim Überfahren der gleichen Referenzmarke durch den Abtastort der zweiten Abtasteinheit 14.2 (oder durch den Abtastort der ersten Abtasteinheit 14.1) wird der Zähler angehalten. Der so ermittelte Zählerwert entspricht dem Referenzabstand $a_0$. Der Referenzabstand $a_0$ wird einmalig ermittelt und zusammen mit der Referenztemperatur $T_0$ in der Auswerteeinheit hinterlegt. Um eine möglichst hohe Genauigkeit der Temperaturkompensation zu erreichen, sollte bei der Ermittlung des Referenzabstands $a_0$ darauf geachtet werden, dass die Längenabweichung des Maßstabs 10 am Ort x, an dem der Referenzabstand $a_0$ ermittelt wird, möglichst gering ist. Für höchste Genauigkeit empfiehlt sich die werkseitige Bestimmung des Referenzabstands $a_0$ unter idealen Bedingungen.

Im Betrieb der Positionsmesseinrichtung wird der aktuelle Abstand (d. h. zweiter Abstand $a_1$) zwischen den beiden Abtastorten mittels Differenzbildung (d. h. Bildung der Differenz der durch die erste und zweite Abtasteinheit 14.1, 14.2 an den beiden Abtastorten ausgegebenen Positionssignale) fortlaufend und damit örtlich aufgelöst ermittelt, d. h. $a_1 = a_1(x)$. Bei Verwendung der Inkrementalteilung erfolgt insbesondere eine Initialisierung (d. h. Nullsetzen des Zählers) der beiden Abtasteinheiten 14.1, 14.2. Zudem wird mithilfe des Sensors 16 (Temperatursensor, z. B. PT100) die aktuelle Temperatur $T_A$ des Abtastträgers 2 fortlaufend und damit örtlich aufgelöst bestimmt, d. h. $T_A = T_A(x)$. Zusammen mit dem bekannten Längenausdehnungskoeffizienten $\alpha_A$ des Abtastträgers 2 ist es so möglich, die thermische Ausdehnung des Abtastträgers 2 über die Temperaturmessung zu bestimmen.

Mit Gleichung 1 wird die örtliche Maßstabsdehnung (d. h. Dehnung $\varepsilon$) zwischen den beiden Abtastorten bestimmt und diese über den Verfahrweg (Ort) x integriert (vgl. Gleichung 2). Die Dehnung $\varepsilon$ des Maßstabs 10 zwischen den beiden Abtastorten wird dabei als konstant angenommen. Als Ergebnis erhält man die Längenänderung $\Delta L_M$ des Maßstabs 10 an der aktuellen X-Position, d. h. $\Delta L_M = \Delta L_M(x)$. Der Einfluss der thermischen Ausdehnung des Abtastträgers 2 wird bei der Bestimmung von $\Delta L_M$ eliminiert.

Die Dehnung $\varepsilon$ des Maßstabs 10 wird in der Auswerteeinheit fortlaufend numerisch integriert (vgl. Gleichung 2) und somit die ortsaufgelöste Längenänderung $\Delta L_M$ des Maßstabs 10 ermittelt. Als Randbedingung zur Bestimmung der Integrationskonstanten wird der temperaturunabhängige Fixpunkt (d. h. zweiter vorbestimmter Ort Q2) des Maßstabs 10 genutzt. Dieser Fixpunkt ist definiert als derjenige Punkt, an dem es zu keiner Relativbewegung zwischen dem Maßstab 10 und dem Grundkörper 1, auf dem der Maßstab 10 montiert ist, kommt. Somit gilt die Bedingung, dass die Längenänderung $\Delta L_M$ des Maßstabs 10 am Fixpunkt gleich Null ist (vgl. Gleichung 4), wobei die örtliche Lage (d. h. X-Position $x_{Fix}$) des temperaturunabhängigen Fixpunkts bekannt und in der Auswerteeinheit hinterlegt ist.

Um den Einfluss von Drifteffekten zu minimieren, ist es vorteilhaft, wenn $\Delta L_M$ bei jeder Überfahrt des temperaturunabhängigen Fixpunkts auf Null gesetzt wird. Zur Realisierung des temperaturunabhängigen Fixpunkts kann der Maßstab 10 auch punktuell mit einem steifen Strukturklebstoff mit dem Untergrund verbunden oder mit einem zusätzlichen Halter geklemmt werden.

Zur Bestimmung des kompensierten Positionswerts $X_K$ wird unter Verwendung von Gleichung 3 der gemessene Positionswert $X_M$ um die Längenänderung $\Delta L_M$ des Maßstabs 10 (vgl. Gleichung 2) ortsaufgelöst kompensiert.

Deutliche Temperaturunterschiede zwischen Maßstab 10 und Abtastträger 2 sind in vielen Anwendungen üblich. Durch die Erfindung kann auch in solchen Fällen die hohe Präzision der Positionsmessung erreicht bzw. beibehalten werden, ohne dass ein kostspieliger Abtastträger 2 und/oder ein kostspieliger Maßstab 10, beispielsweise gefertigt aus Zerodur, verwendet werden muss, was zudem eine Einschränkung der Konstruktionsmöglichkeiten bedeuten würde.

In vielen Anwendungen ist zudem die Temperatur $T_M$ über die Länge des Maßstabs 10 oft stark inhomogen. Damit variieren auch die thermische Ausdehnung und die temperaturbedingte Längenänderung $\Delta L_M$ des Maßstabs 10 entsprechend stark über die Maßstabslänge. Durch die numerische Integration gemäß Gleichung 2 werden diese Effekte hingegen berücksichtigt. Somit kann wiederum die hohe Präzision der Positionsmessung erreicht bzw. beibehalten werden.

Die Erfindung ist nicht auf das eindimensionale Messsystem beschränkt. Die Positionsmesseinrichtung kann auch ein mehrdimensionales Messsystem (Positionsmesseinrichtung zur Messung in mehreren Freiheitsgraden, z. B. sogenannter 1Dplus Encoder) sein.

**Patentansprüche**

1. Positionsmesseinrichtung, mit
   einem Maßstab (10), der eine Messteilung (12) aufweist,
   einer ersten Abtasteinheit (14.1) zum Abtasten der Messteilung (12), einer zweiten Abtasteinheit (14.2) zum Abtasten der Messteilung (12), und
   einem Abtastträger (2) zum Tragen der ersten und zweiten Abtasteinheit (14.1, 14.2),
   wobei Abtastorte der ersten und zweiten Abtasteinheit (14.1, 14.2) bei einer vorbestimmten Temperatur (To) der Positionsmesseinrichtung in einem vorbestimmten ersten Abstand (ao) voneinander angeordnet sind, **dadurch gekennzeichnet, dass**
   die Positionsmesseinrichtung mindestens einen Sensor (16) zum Erfassen einer Temperatur ($T_A$) des Abtastträgers (2) aufweist, und
   die Positionsmesseinrichtung dazu ausgebildet ist, in Abhängigkeit eines durch die erste und zweite Abtasteinheit (14.1, 14.2) ermittelten zweiten Abstands ($a_1$) zwischen den Abtastorten der ersten und zweiten Abtasteinheit (14.1, 14.2) bei der Temperatur ($T_A$) des Abtastträgers (2) und in Abhängigkeit der Temperatur ($T_A$) des Abtastträgers (2) eine Dehnung ($\varepsilon$) des Maßstabs (10) örtlich aufgelöst zu bestimmen.

2. Positionsmesseinrichtung nach Anspruch 1, wobei die Positionsmesseinrichtung dazu ausgebildet ist, in Abhängigkeit der Dehnung ($\varepsilon$) des Maßstabs (10) eine Längenänderung ($\Delta L_M$) des Maßstabs (10) örtlich aufgelöst zu bestimmen.

3. Positionsmesseinrichtung nach Anspruch 2, wobei die Positionsmesseinrichtung dazu ausgebildet ist, die Längenänderung ($\Delta L_M$) des Maßstabs (10) durch eine numerische Integration der Dehnung ($\varepsilon$) des Maßstabs (10) über den Ort (x) zu bestimmen.

4. Positionsmesseinrichtung nach Anspruch 2 oder 3, wobei die Positionsmesseinrichtung dazu ausgebildet ist, in Abhängigkeit der Längenänderung ($\Delta L_M$) des Maßstabs (10) einen thermisch kompensierten Positionswert ($X_K$) örtlich aufgelöst zu bestimmen.

5. Positionsmesseinrichtung nach einem der vorhergehenden Ansprüche, wobei der Sensor (16) an oder in dem Abtastträger (2) oder in einer der ersten und zweiten Abtasteinheit (14.1, 14.2) angeordnet ist.

6. Positionsmesseinrichtung nach einem der vorhergehenden Ansprüche, wobei der Sensor (16) an einem ersten vorbestimmten Ort (Q1) zwischen den Abtastorten der ersten und zweiten Abtasteinheit (14.1, 14.2) angeordnet ist.

**7.** Positionsmesseinrichtung nach Anspruch 6, wobei der erste vorbestimmte Ort (Q1) in der Mitte zwischen den Abtastorten der ersten und zweiten Abtasteinheit (14.1, 14.2) liegt.

**8.** Positionsmesseinrichtung nach Anspruch 6 oder 7, wobei der erste vorbestimmte Ort (Q1) ein Ort ist, an dem die Temperatur $(T_A)$ des Abtastträgers (2) gleich einem Mittelwert der Temperatur $(T_A)$ des Abtastträgers (2) zwischen den Abtastorten der ersten und zweiten Abtasteinheit (14.1, 14.2) ist.

**9.** Positionsmesseinrichtung nach Anspruch 6 oder 7, wobei der erste vorbestimmte Ort (Q1) ein Ort ist, an dem die Temperatur $(T_A)$ des Abtastträgers (2) von einem Mittelwert der Temperatur $(T_A)$ des Abtastträgers (2) zwischen den Abtastorten der ersten und zweiten Abtasteinheit (14.1, 14.2) abweicht, wobei die Positionsmesseinrichtung dazu ausgebildet ist, in Abhängigkeit einer Abweichung der Temperatur $(T_A)$ des Abtastträgers (2) vom Mittelwert der Temperatur $(T_A)$ des Abtastträgers (2) zwischen den Abtastorten der ersten und zweiten Abtasteinheit (14.1, 14.2) einen Korrekturparameter zu bestimmen und in Abhängigkeit des Korrekturparameters die Temperatur $(T_A)$ des Abtastträgers (2) für die Bestimmung der Dehnung $(\varepsilon)$ des Maßstabs (10) zu korrigieren.

**10.** Positionsmesseinrichtung nach einem der vorhergehenden Ansprüche, wobei die Positionsmesseinrichtung ein Paar von Befestigungselementen (20.1, 20.2) zum Befestigen des Maßstabs (10) an einem Grundkörper (1) aufweist, wobei die Befestigungselemente (20.1, 20.2) dazu ausgebildet sind, den Maßstab (10) an einem zweiten vorbestimmten Ort (Q2) in einer Messrichtung (X) starr gegenüber dem Grundkörper (1) zu tragen, wobei der zweite vorbestimmte Ort (Q2) ein Ort ist, an dem eine Längenänderung $(\Delta L_M)$ des Maßstabs (10) gleich Null ist.

**11.** Positionsmesseinrichtung nach einem der vorhergehenden Ansprüche, wobei der erste Abstand $(a_0)$ ein werkseitig bestimmter Abstand ist.

**12.** Positionsmesseinrichtung nach einem der vorhergehenden Ansprüche, wobei die Temperatur $(T_A)$ des Abtastträgers (2) und die vorbestimmte Temperatur $(T_0)$ gleich oder voneinander verschieden sind.

**13.** Positionsmesseinrichtung nach einem der vorhergehenden Ansprüche, wobei die Temperatur $(T_A)$ des Abtastträgers (2) und eine durch die Positionsmesseinrichtung bestimmbare Temperatur $(T_M)$ des Maßstabs (10) gleich oder voneinander verschieden sind.

**14.** Positionsmesseinrichtung nach einem der vorhergehenden Ansprüche, wobei der Abtastträger (2) einen von Null verschiedenen thermischen Ausdehnungskoeffizienten $(\alpha_A)$ hat.

**15.** Positionsmesseinrichtung nach einem der vorhergehenden Ansprüche, wobei die Messteilung (12) eine Inkrementalteilung oder eine absolute Teilung ist.

Fig.1

Fig.2

**Europäisches Patentamt**
**European Patent Office**
**Office européen des brevets**

# EUROPÄISCHER RECHERCHENBERICHT

Nummer der Anmeldung

EP 20 20 0310

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | DE 199 19 042 A1 (HEIDENHAIN GMBH DR JOHANNES [DE]) 2. November 2000 (2000-11-02) * Seite 2, Zeile 57 - Seite 4, Zeile 4; Abbildungen 1-2 * | 1-15 | INV. G01D5/244 |
| Y | EP 2 908 100 A1 (HEXAGON TECHNOLOGY CT GMBH [CH]) 19. August 2015 (2015-08-19) * Spalte 12, Absatz 38 - Spalte 32, Absatz 76; Abbildung 9 * | 1-15 | |
| A | WO 2012/114168 A1 (INNSE BERARDI S P A [IT]; VALSECCHI NATALE [IT] ET AL.) 30. August 2012 (2012-08-30) * das ganze Dokument * | 1-15 | |
| A | EP 2 908 098 A1 (HEXAGON TECHNOLOGY CT GMBH [CH]) 19. August 2015 (2015-08-19) * das ganze Dokument * | 1-15 | |

RECHERCHIERTE SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| München | 2. März 2021 | Lyons, Christopher |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 20 0310

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2021

| Im Recherchenbericht angeführtes Patentdokument | Datum der Veröffentlichung | Mitglied(er) der Patentfamilie | Datum der Veröffentlichung |
|---|---|---|---|
| DE 19919042 A1 | 02-11-2000 | KEINE | |
| EP 2908100 A1 | 19-08-2015 | CN 104848813 A | 19-08-2015 |
| | | EP 2908100 A1 | 19-08-2015 |
| | | US 2015233738 A1 | 20-08-2015 |
| WO 2012114168 A1 | 30-08-2012 | CN 103442845 A | 11-12-2013 |
| | | EP 2678134 A1 | 01-01-2014 |
| | | ES 2687829 T3 | 29-10-2018 |
| | | IT 1405141 B1 | 20-12-2013 |
| | | US 2013325162 A1 | 05-12-2013 |
| | | WO 2012114168 A1 | 30-08-2012 |
| EP 2908098 A1 | 19-08-2015 | CN 104848877 A | 19-08-2015 |
| | | EP 2908098 A1 | 19-08-2015 |
| | | US 2015233742 A1 | 20-08-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19919042 A1